# EUROPÄISCHE PATENTSCHRIFT

(11) **EP 1 654 135 B1**
(45) Veröffentlichungstag und Bekanntmachung des Hinweises auf die Patenterteilung: **10.01.2007**
(21) Anmeldenummer: 04803119.9
(22) Anmeldetag: 10.11.2004
(51) Int. Cl.: B60K 17/10, F04B 1/22, F04B 23/06, F16H 61/44, F16H 39/02

(54) **HYDROSTATISCHES ANTRIEBSSYSTEM MIT PUMPENSEITIGER HYDRAULIKFLUIDMENGENTEILUNG**
HYDROSTATIC DRIVE SYSTEM WITH PUMP-SIDED DIVISION OF THE AMOUNT OF HYDRAULIC FLUID
SYSTEME D'ENTRAINEMENT HYDROSTATIQUE AVEC SEPARATION DE MASSE DE LIQUIDE HYDRAULIQUE COTE POMPE

(30) Priorität: 02.12.2003 DE 10356155
(43) Veröffentlichungstag der Anmeldung: 10.05.2006
(73) Patentinhaber: Brueninghaus Hydromatik GmbH, 89275 Elchingen (DE)
(72) Erfinder: ESSIG, Heinz-Gerhard, 89173 Lonsee (DE); RÜCKGAUER, Norbert, 89185 Hüttisheim (DE)
(74) Vertreter: Körfer, Thomas
(86) Internationale Anmeldenummer: PCT/EP2004/012724
(87) Internationale Veröffentlichungsnummer: WO 2005/053989

(56) Entgegenhaltungen:
- EP-A- 0 025 372
- EP-A- 0 378 742
- DE-A1- 10 032 514
- DE-A1- 19 833 942
- GB-A- 893 074
- GB-A- 2 058 300

## Beschreibung

Die Erfindung betrifft ein hydrostatisches Antriebssystem mit pumpenseitiger Hydraulikfluidmengenteilung.

Hydraulische Fahrantriebe, die für einen Kurven-Fahrbetrieb ausgelegt sind, weisen, wie in der EP 0 378 742 A2 dargestellt, zwei voneinander getrennte hydraulische Kreisläufe auf, wobei jeder hydraulische Kreislauf aus einer Hydropumpe und einem Hydromotor besteht. Auf diese Weise ist es möglich, die unterschiedlichen Hydraulikfluidmengen für die beiden Hydromotoren bei einer Kurvenfahrt des hydraulischen Fahrantriebs getrennt von zwei Hydropumpen zu fordern.

Ein hydraulischer Fahrantrieb entsprechend der EP 0 378 742 A2 ist durch die Schwierigkeit gekennzeichnet, die bei einer Geradeaus-Fahrt erforderlichen gleich großen Hydraulikfluidmengen für die beiden Hydromotoren durch die beiden Hydropumpen zu erzeugen. Hinzukommt, daß bei einer Geradeaus-Fahrt des hydraulischen Fahrantriebs im Falle eines schlupfenden oder gar durchdrehenden Antriebsstranges die Hydraulikfluidmenge in dem dazugehörigen hydraulischen Kreislauf deutlich ansteigt, so daß der Hydromotor des jeweils anderen nicht schlupfenden und nicht durchdrehenden Antriebsstranges hydraulisch "überbrückt" wird. Auf diese Weise wird der hydraulische Fahrantrieb unwirksam.

Der hydrostatische Fahrantrieb der DE 198 33 942 A1 schaltet die beiden in der EP 0 378 742 A2 parallel geschalteten hydraulischen Kreisläufe in Serie. Somit erhält man einen einzigen hydraulischen Kreislauf, der als Verkettung der ersten Hydropumpe, des ersten Hydromotors, der zweiten Hydropumpe und des zweiten Hydromotors gebildet wird. Damit ist gewährleistet, daß in allen Abschnitten des hydraulischen Kreislaufes eine gleich große Hydraulikfluidmenge gefördert wird. Besteht bei einem Antriebsstrang die Gefahr eines Schlupfes oder eines Durchdrehens, so kommt es im hydraulischen Kreislauf systembedingt zu keinem Anstieg der Hydraulikfluidmenge. Der schlupfende bzw. durchdrehende Antriebsstrang wird vielmehr durch den nicht schlupfenden bzw. nicht durchdrehenden anderen Antriebsstrang des hydrostatischen Fahrantriebs abgebremst.

Nachteilig am hydrostatischen Fahrantrieb der DE 198 33 942 A1 ist die Verwendung von zwei getrennten Hydropumpen, zumal im geschlossenen hydraulischen Kreislauf des hydrostatischen Fahrantriebs von beiden Hydropumpen die gleiche Hydraulikfluidmenge gefördert wird.

Der Erfindung liegt daher die Aufgabe zugrunde, einen hydrostatischen Fahrantrieb derart weiterzuentwickeln, daß bei einer Serienschaltung von Hydromotoren in einem hydraulischen Kreislauf zur Vermeidung eines Schlupfes oder eines Durchdrehens eines Antriebsstranges ein Pumpenaggregat zur Anwendung kommt, das konstruktiv wesentlich einfacher als ein aus zwei getrennten Pumpen bestehendes Pumpenaggregat gestaltet ist.

Die Aufgabe der Erfindung wird durch ein hydrostatisches Antriebssystem mit den Merkmalen des Anspruchs 1 gelöst.

Der hydraulische Kreislauf besteht in der Minimalkonfiguration der ersten Ausführungsform aus zwei Antriebssträngen, die jeweils von einem Hydromotor angetrieben werden, welche wiederum von einer Hydropumpe mit einer Hydraulikfluidmenge versorgt werden. Die Hydropumpe weist zwei Teilförderstränge auf, die jeweils einen Teilhydraulikfluidstrom in einer gemeinsamen Zylindertrommel der erfindungsgemäßen Hydropumpe des erfindungsgemäßen hydrostatischen Antriebssystems fördern. Die beiden Teilförderstränge der erfindungsgemäßen Hydropumpe des erfindungsgemäßen hydrostatischen Antriebssystems übernehmen die Aufgabe der beiden Hydropumpen des hydrostatischen Fahrantriebs der DE 198 33 942 A1 und sind deshalb innerhalb des hydraulischen Kreislaufs zwischen den beiden Hydromotoren mit diesen jeweils in Serie geschaltet. Auf diese Weise kann ein möglicher Schlupf oder ein mögliches Durchdrehen eines der beiden Hydromotoren verhindert werden.

Im Vergleich zum hydrostatischen Fahrantrieb der DE 198 33 942 A1 liegt ein Ein-Pumpensystem vor. Dieses ist durch einen geringeren Bauraum, insbesondere eine geringere Baulänge, und reduzierten Verrohrungsaufwand gekennzeichnet. Gegenüber einem Zwei-Pumpensystem benötigt das erfindungsgemäße hydrostatische Antriebssystem kein Verteilergetriebe zum mechanischen Ankoppeln der Einzelpumpen, was wiederum den erforderlichen Bauraum reduziert und verschleißbedingte Wartungs- und Inspektionsaufwendungen nicht erforderlich macht.

Schließlich sei erwähnt, daß bei Anwendungen mit hohen hydraulischen Leistungsbedarf anstelle einer Hydropumpe eine Parallelschaltung mehrerer Hydropumpen möglich ist.

Vorteilhafte Ausgestaltungen der Erfindung sind in den abhängigen Ansprüchen angegeben.

In einer zweiten Ausführungsforrm des erfindungsgemäßen hydrostatischen Antriebssystems werden die beiden Antriebsstränge durch jeweils zwei mechanisch gekoppelte Hydromotoren angetrieben. Die ein- oder ausspeiseseitigen Anschlüsse des ersten und dritten Hydromotors sowie des dritten und vierten Hydromotors können jeweils gemeinsam an einem Anschluß eines Teilförderstrangs der Hydropumpe des erfindungsgemäßen hydrostatischen Antriebssystems angeschlossen sein, während die jeweils anderen Anschlüsse des ersten und dritten Hydromotors sowie des zweiten und vierten Hydromotors an der gegenüberliegenden Anschlußseite der Hydropumpe jeweils mit einem Anschluß eines der beiden Teilförderstränge der Hydropumpe des erfindungsgemäßen hydrostatische Antriebssystems verbunden sind. Auf diese Weise ist gewährleistet, daß zumindest über den ersten und zweiten Hydromotor sowie die beiden Teilförderstränge der Hydropumpe ein in sich geschlossener hydraulischer Kreislauf besteht, der im Falle eines Schlupfes oder eines Durchdrehens des ersten oder zweiten Antriebsstranges für ein Abbremsen durch den jeweils anderen Antriebsstrang sorgt.

In einer dritten Ausführungsforrm des erfindungsgemäßen hydrostatischen Antriebssystems, die auf der ersten Ausführungsforrm des erfindungsgemäßen hydrostatischen Antriebssystem aufbaut, wird ein dritter Antriebsstrang von einem fünften Hydromotor angetrieben. Der erste und dritte Antriebsstrang ist für den Antrieb jeweils des vorderen rechten und linken Rades bzw. der vorderen rechten und linken Kette des Fahrzeugs verantwortlich. Der zweite Antriebsstrang treibt das hintere Rad bzw. die hintere Kette an. Da der ersten und fünfte Hydromotor parallel geschaltet ist und jeweils mit dem zweiten Hydromotor und den beiden Teilfördersträngen der Hydropumpe zu einem geschlossenen hydraulischen Kreislauf in Serie geschaltet sind, wird ein Schlupf oder ein Durchdrehen des ersten oder dritten Antriebsstranges durch den zweiten Antriebsstrang bzw. ein Schlupf oder ein Durchdrehen des zweiten Antriebsstranges durch den ersten und dritten Antriebsstrang abgebremst.

Bei der vierten Ausführungsforrm des erfindungsgemäßen hydrostatischen Antriebsystems, die auf der dritten Ausführungsforrm aufbaut und wie diese drei Antriebsstränge aufweist, werden der erste und dritte Antriebsstrang durch jeweils zwei mechanisch gekoppelte Hydromotoren angetrieben. Die ein- oder ausspeiseseitigen Anschlüsse des den ersten Antriebsstrang antreibenden ersten und dritten Hydromotor sowie des den dritten Antriebsstrang antreibenden fünften und sechsten Hydromotor können in Analogie zur zweiten Ausführungsform jeweils gemeinsam an einem Anschluß eines Teilförderstrangs der Hydropumpe angeschlossen sein, während die jeweils anderen Anschlüsse des ersten und dritten Hydromotors sowie des fünften und sechsten Hydromotors getrennt an der gegenüberliegenden Anschlußseite der Hydropumpe an jeweils einem Anschluß eines der beiden Teilförderstränge der Hydropumpe angeschlossen sein können. Auf diese Weise ist wie in der zweiten Ausführungsforrm gewährleistet, daß im Falle eines Schlupfes oder eines Durchdrehens des ersten oder dritten Antriebsstranges für ein Abbremsen durch den zweiten Antriebsstrang gesorgt ist, während bei Schlupf oder Durchdrehen des zweiten Antriebsstranges ein Abbremsen durch den ersten und dritten Antriebsstrang erfolgt.

Bei der fünften Ausführungsform des erfindungsgemäßen hydrostatischen Antriebsystems ist der den zweiten Antriebsstrang antreibende zweite Hydromotor im Gegesatz zur dritten und vierten Ausführungsform mit seinen beiden Anschlüssen jeweils an den beiden Anschlüssen des ersten Teilförderstrangs der Hydropumpe angeschlossen. Im Schlupffall des zweiten Hydromotors erfolgt eine Drehzahlbegrenzung und damit eine Schlupfvermeidung des zweiten Hydromotors dadurch, daß bei nicht schlupfenden ersten Antriebsstrang dem zweiten Hydromotor nicht die für einen Schlupf erforderliche Hydraulikfluidmenge vom ersten Hydromotor, der ebenfalls vom ersten Teilförderstrang der Hydropumpe versorgt wird, abgezweigt wird.

Die sechste Ausführungsforrm des erfindungsgemäßen hydrostatische Antriebssystem ist für vier Antriebstränge vorgesehen. Hierbei ist der fünfte Hydromotor, der den dritten Antriebsstrang antreibt, parallel zum ersten Antriebsstrang antreibenden ersten Hydromotor hydraulisch geschaltet, während der siebente Hydromotor, der den vierten Antriebsstrang antreibt, parallel zum zweiten Antriebsstrang antreibenden zweiten Hydromotor geschaltet ist. Der erste und fünfte Hydromotor ist in der fünften Ausführungsform des erfindungsgemäßen hydrostatischen Antriebssystems in Analogie zur ersten Ausführungsform mit dem zweiten und siebenten Hydromotor über die beiden Teilförderstränge der Hydropumpe in einem geschlossenen hydraulischen Kreislauf in Serie geschaltet. Auf diese Weise kann bei einem Schlupf oder einem Durchdrehen des ersten, zweiten, dritten oder vierten Antriebsstranges ein Abbremsen durch die beiden anderen jeweils zum schlupfenden oder durchdrehenden Hydromotor in Serie geschalteten Hydromotoren verhindert werden.

In der siebenten Ausführungsform des erfindungsgemäßen hydraulischen Antriebssystems, das auf der sechsten Ausführungsform aufbaut, werden alle vier Antriebsstränge durch zwei mechanisch gekoppelte Hydromotoren angetrieben. Die Verschaltung der insgesamt acht Hydromotoren mit den beiden Anschlüssen der beiden Teilförderstränge der Hydropumpe erfolgt in Analogie zur zweiten und dritten Ausführungsform und verhindert damit einen Schlupf oder ein Durchdrehen eines der vier Antriebsstränge.

Zwischen den beiden Arbeitsleitungen, die jeweils einspeise- und ausspeiseseitig an den beiden Anschlüssen der beiden Teilförderstränge der Hydropumpe angeschlossen sind, können bei Geradeausfahrt des Fahrzeugs über angesteuerte 2/2-Wegeventile im Nicht-Schlupffall eines Antriebsstranges Ausgleichströme zwischen den beiden Arbeitsleitungen verwirklicht werden, um den Differentialausgleich bei Kurvenfahrt zu gewährleisten. Diese 2/2-Wegeventile können auch einspeise- und ausspeiseseitig in der Hydropumpe integriert sein.

Die Ausführungsformen der Erfindung sind in der Zeichnung dargestellt und werden nachfolgend näher beschrieben. Es zeigen:
- Fig. 1: ein Längsschnitt durch eine Hydropumpe eines erfindungsgemäßen hydraulischen Antriebssystems mit pumpenseitiger Hydraulikfluidmengenteilung;
- Fig. 2: eine vergrößerte Darstellung eines Ausschnitts des Längsschnitts der Hydropumpe eines erfindungsgemäßen hydraulischen Antriebssystems mit pumpenseitiger Hydraulikfluidmengenteilung;
- Fig. 3: ein Schaltbild einer ersten Ausführungsform eines erfindungsgemäßen hydraulischen Antriebssystems mit pumpenseitiger Hydraulikfluidmengenteilung;
- Fig. 4: ein Schaltbild einer zweiten Ausführungsform eines erfindungsgemäßen hydraulischen Antriebssystems mit pumpenseitiger Hydraulikfluidmengenteilung;
- Fig. 5: ein Schaltbild einer dritten Ausführungsform eines erfindungsgemäßen hydraulischen Antriebssystems mit pumpenseitiger Hydraulikfluidmengenteilung;
- Fig. 6: ein Schaltbild einer vierten Ausführungsform eines erfindungsgemäßen hydraulischen Antriebssystems mit pumpenseitiger Hydraulikfluidmengenteilung;
- Fig. 7: ein Schaltbild einer fünften Ausführungsform eines erfindungsgemäßen hydraulischen Antriebssystems mit pumpenseitiger Hydraulikfluidmengenteilung;
- Fig. 8: ein Schaltbild einer sechsten Ausführungsform eines erfindungsgemäßen hydraulischen Antriebssystems mit pumpenseitiger Hydraulikfluidmengenteilung und
- Fig. 9: ein Schaltbild einer siebenten Ausführungsform eines erfindungsgemäßen hydraulischen Antriebssystems mit pumpenseitiger Hydraulikfluidmengenteilung.

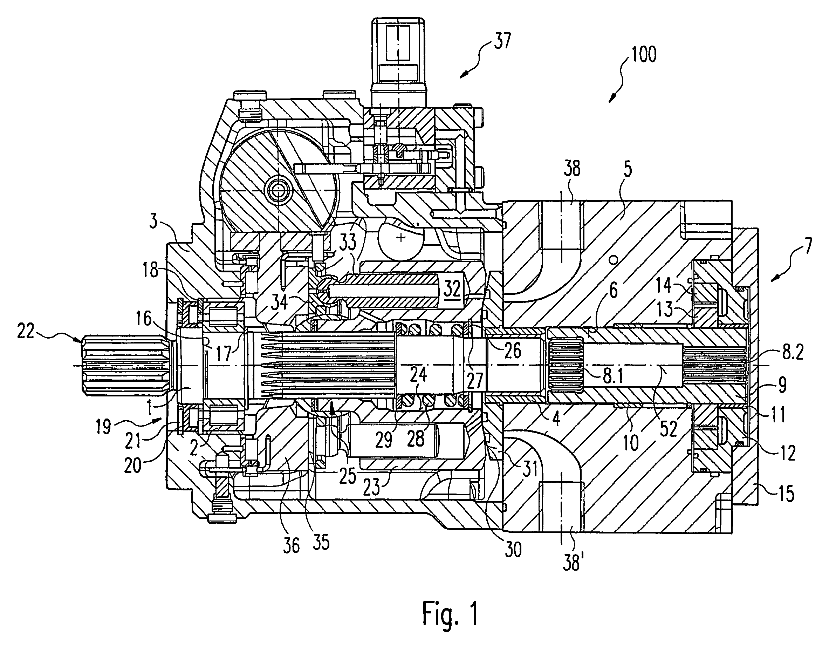

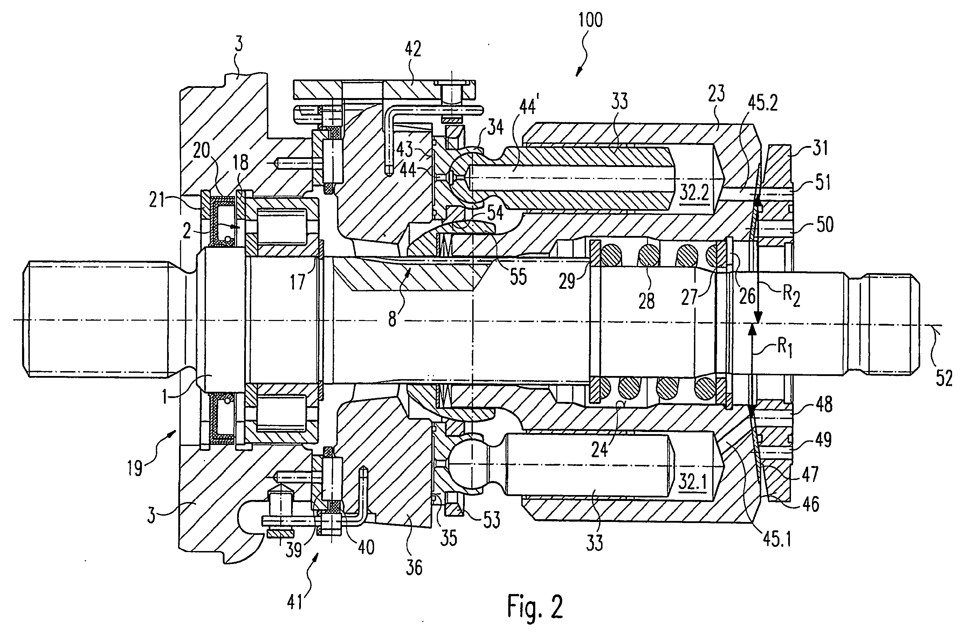

Ein Ausführungsbeispiel der Hydropumpe 100 des erfindungsgemäßen hydraulischen Antriebssystems mit pumpenseitiger Hydraulikfluidmengenteilung wird nachfolgend unter Bezugnahme auf Fig. 1 und 2 beschrieben.

In dem in Fig. 1 dargestellten Längsschnitt der erfindungsgemäßen Hydropumpe ist gezeigt, wie die gemeinsame Antriebswelle 1 durch ein Rollenlager 2 an einem Ende eines Pumpengehäuses 3 gelagert ist- Zusätzlich ist die gemeinsame Antriebswelle 1 in einem Gleitlager 4 gelagert, welches in einer Anschlußplatte 5 angeordnet ist, die das Pumpengehäuse 3 an dem gegenüberliegenden Ende verschließt.

In der Anschlußplatte 5 ist eine, die Anschlußplatte vollständig in axialer Richtung durchdringende Ausnehmung 6 ausgebildet, in der zum einen das Gleitlager 4 angeordnet ist und die zum anderen von der gemeinsamen Antriebswelle 1 durchdrungen ist. Auf der von dem Pumpengehäuse 3 abgewandten Seite der Anschlußplatte 5 ist in eine radiale Erweiterung der Ausnehmung 6 die Hilfspumpe 7 eingesetzt. Zum Antreiben der Hilfspumpe 7 weist die gemeinsame Antriebswelle 1 eine Verzahnung 8.1 auf, die mit der entsprechenden Verzahnung einer Hilfspumpenwelle 9 im Eingriff ist. Die Hilfspumpenwelle 9 ist in der Ausnehmung 6 durch ein erstes Hilfspumpengleitlager 10 und durch ein zweites Hilfspumpengleitlager 11 in der Hilfspumpenanschlussplatte 12 gelagert.

Auf der Hilfspumpenwelle 9 ist ein Zahnrad 13 angeordnet, welches im Eingriff mit einem Hohlrad 14 ist. Über das Zahnrad 13 wird das Hohlrad 14, das drehbar in der Hilfspumpenanschlussplatte 12 angeordnet ist, ebenfalls von der Hilfspumpenwelle 9 und damit letztlich von der gemeinsamen Antriebswelle 1 angetrieben. In der Hilfspumpenanschlußplatte 12 sind der saug- und der druckseitige Anschluß für die Hilfspumpe 7 ausgebildet. Die Hilfspumpe 7 wird durch einen Deckel 15, der an der Anschlußplatte 5 montiert ist, in der radialen Erweiterung der Ausnehmung 6 der Anschlußplatte 5 fixiert.

Der Innenring des Rollenlagers 2 ist in axialer Richtung auf der gemeinsamen Antriebswelle 1 fixiert. Der Innenring liegt einerseits an einem Bund 16 der gemeinsamen Antriebswelle 1 an und ist auf der anderen Seite durch einen Sicherungsring 17 in dieser axialen Position gehalten, der in einer Nut der gemeinsamen Antriebswelle 1 eingesetzt ist. Die axiale Position des Rollenlagers 2 bezüglich des Pumpengehäuses 3 wird durch den Sicherungsring 18 bestimmt, der in einer umlaufenden Nut der Wellenöffnung 19 eingesetzt ist. In Richtung der Außenseite des Pumpengehäuses 3 ist in der Wellenöffnung 19 außerdem ein Dichtring 20 und abschließend ein weiterer Sicherungsring 21 angeordnet, wobei der Sicherungsring 21 in eine umlaufende Nut der Wellenöffnung 19 eingesetzt ist.

An dem aus dem Pumpengehäuse 3 herausragenden Ende der gemeinsamen Antriebswelle 1 ist eine Antriebsverzahnung 22 ausgebildet, über die die Hydropumpe durch eine nicht dargestellte Antriebsmaschine angetrieben wird.

Im Inneren des Pumpengehäuses 3 ist eine Zylindertrommel 23 angeordnet, die eine zentrale Durchgangsöffnung 24 aufweist, welche von der gemeinsamen Antriebswelle 1 durchdrungen wird. Über eine weitere Antriebsverzahnung 25 ist die Zylindertrommel 23 verdrehgesichert, aber in axialer Richtung verschiebbar mit der gemeinsamen Antriebswelle 1 verbunden, so daß sich eine Drehbewegung der gemeinsamen Antriebswelle 1 auf die Zylindertrommel 23 überträgt.

In eine in der zentralen Durchgangsöffnung 24 ausgebildeten Nut ist ein weiterer Sicherungsring 26 eingesetzt, an dem eine erste Stützscheibe 27 anliegt. Die erste Stützscheibe 27 bildet ein erstes Federlager für eine Druckfeder 28 aus. Ein zweites Federlager für die Druckfeder 28 wird durch eine zweite Stützscheibe 29 gebildet, die sich an der Stirnseite der weiteren Antriebsverzahnung 25 abstützt. Die Druckfeder 28 übt damit einerseits auf die gemeinsame Antriebswelle 1 und andererseits auf die Zylindertrommel 23 jeweils eine Kraft in entgegengesetzt axialer Richtung aus. Die gemeinsame Antriebswelle 1 wird so belastet, daß der Außenring des Rollenlagers 2 sich an dem Sicherungsring 18 abstützt.

In entgegengesetzter Richtung wirkt die Druckfeder 28 auf die Zylindertrommel 23, die mit einer an der Stirnseite der Zylindertrommel 23 ausgebildeten sphärischen Vertiefung 30, in Anlage an einer Steuerplatte 31 gehalten wird. Die Steuerplatte 31 liegt wiederum mit der von der Zylindertrommel 23 abgewandten Seite dichtend an der Anschlußplatte 5 an. Durch die sphärische Vertiefung 30, die mit einer entsprechenden sphärischen Ausformung der Steuerplatte 31 korrespondiert, wird die Zylindertrommel 23 zentriert.

Die Position der Steuerplatte 31 in radialer Richtung wird durch den äußeren Umfang des Gleitlagers 4 festgelegt. Das Gleitlager 4 ist zu diesem Zweck nur zum Teil in die Ausnehmung 6 in der Anschlußplatte 5 eingesetzt.

In die Zylindertrommel 23 sind über einen gemeinsamen Teilkreis verteilt Zylinderbohrungen 32 eingebracht, in denen Kolben 33 angeordnet sind, die in den Zylinderbohrungen 32 längsverschieblich sind. An dem von der sphärischen Vertiefung 30 abgewandten Ende ragen die Kolben 33 teilweise aus der Zylindertrommel 23 heraus. An diesem Ende ist an den Kolben 33 jeweils ein Gleitschuh 34 befestigt, über den sich die Kolben 33 auf einer Lauffläche 35 einer Schwenkscheibe 36 abstützen.

Zum Erzeugen einer Hubbewegung der Kolben 33 ist der Winkel, den die Lauffläche 35 der Schwenkscheibe 36 mit der Mittelachse einschließt, veränderbar. Die Schwenkscheibe 36 kann hierzu durch die Verstelleinrichtung 37 in ihrer Neigung verstellt werden. Zum Aufnehmen der Kräfte, die durch die Gleitschuhe 34 auf die Schwenkscheibe 36 übertragen werden, ist die Schwenkscheibe 36 in dem Pumpengehäuse 3 rollengelagert.

Zum Anschließen der Hydropumpe 100 an einen ersten hydraulischen Kreislauf und an einen zweiten hydraulischen Kreislauf sind in der Anschlußplatte 5 ein erster Anschluß 38, ein zweiter Anschluß 38', ein dritter Anschluß 56 und ein vierter Anschluß 56' vorgesehen. In Fig. 1 ist schematisch ein erster Anschluß 38 und ein zweiter Anschluß 38' dargestellt, die in nicht gezeigter Weise über die Steuerplatte 31 mit den Zylinderbohrungen 32 verbindbar sind und einen ersten Teilförderstrang 101 der Hydropumpe 100 für einen ersten hydraulischen Kreislauf bilden. Der in Fig. 1 nicht dargestellte dritte und vierte Anschluß 56 und 56' ist in analoger Weise mit den Zylinderbohrungen 32 verbindbar und bildet den zweiten Teilförderstrang 102 der Hydropumpe 100 für einen zweiten hydraulischen Kreislauf.

Eine vergrößerte Darstellung der im Inneren des Pumpengehäuses 3 zusammenwirkenden Bauteile ist in Fig. 2 dargestellt.

Auf ihrer von der Lauffläche 35 abgewandten Seite stützt sich die Schwenkscheibe 36 auf einem Zylinderrollenlager 39 ab, dessen Zylinderrollen von einem Lagerkäfig 40 gehalten werden. Um eine sichere Rückkehr der Zylinderrollen nach jeder Schwenkbewegung in ihre Ausgangslage sicherzustellen, ist der Lagerkäfig 40 an einem Sicherungsmechanismus 41 befestigt, durch den der Lagerkäfig 40 eine kontrollierte Bewegung sowohl beim Ausschwenken als auch beim Zurückschwenken ausführt.

Zum Ausführen einer Schwenkbewegung ist die Schwenkscheibe 36 an einen Gleitstein 42 gekoppelt, der auf nicht dargestellte Weise die Schwenkscheibe 36 um eine in der Zeichenebene liegende Achse dreht.

Die in Fig. 1 allgemein mit 32 bezeichneten Zylinderbohrungen unterteilen sich in eine erste Gruppe von Zylinderbohrungen 32.1 und eine zweite Gruppe von Zylinderbohrungen 32.2. Wie es bei den Ausführungen zu Fig. 1 bereits kurz erläutert wurde, ist an dem von der Steuerplatte 31 abgewandten Ende der Kolben 33 jeweils ein Gleitschuh 34 angeordnet. Der Gleitschuh 34 ist mit einer Ausnehmung an einem kugelförmigen Kopf des Kolbens 33 befestigt, so daß der Gleitschuh 34 beweglich an dem Kolben 33 fixiert ist und Zug- und Druckkräfte übertragbar sind.

An dem Gleitschuh 34 ist eine Gleitfläche 43 ausgebildet, mit der sich der Gleitschuh 34 und damit der Kolben 33 auf der Lauffläche 35 der Schwenkscheibe 36 abstützt. In der Gleitfläche 43 sind Schmierölnuten ausgebildet, die über einen in dem Gleitschuh 34 ausgebildeten Schmierölkanal 44, der in dem Kolben 33 als Schmierölbohrung 44' fortgesetzt wird, mit den in der Zylindertrommel 23 ausgebildeten Zylinderbohrungen 32 verbunden sind.

Durch das Abstützen der Gleitschuhe 34 an der Lauffläche 35 führen die Kolben 33 bei Rotation der gemeinsamen Antriebswelle 1 eine Hubbewegung aus, durch die das in den Zylinderräumen in der Zylindertrommel 23 befindliche Druckmittel unter Druck gesetzt wird. Ein Teil dieses Druckmittels tritt an der Gleitfläche 43 aus und bildet so auf der Lauffläche 35 ein hydrodynamisches Lager für den Gleitschuh 34.

Um das Druckmittel aus den Zylinderräumen in einen ersten bzw. zweiten hydraulischen Kreislauf zu fördern, sind mit den Zylinderbohrungen der ersten Gruppe 32.1 bzw. den Zylinderbohrungen der zweiten Gruppe 32.2 jeweils erste Verbindungskanäle 45.1 bzw. zweite Verbindungskanäle 45.2 verbunden. Die ersten und zweiten Verbindungskanäle 45.1 und 45.2 verlaufen von den Zylinderbohrungen der ersten Gruppe 32.1 bzw. den Zylinderbohrungen der zweiten Gruppe 32.2 zu der sphärischen Vertiefung 30, die an einer Stirnseite 46 der Zylindertrommel 23 ausgebildet ist.

In der verdrehgesichert mit der Anschlußplatte 5 verbundenen Steuerplatte 31 ist eine erste Steuerniere 48 und eine zweite Steuerniere 49 ausgebildet, die die Steuerplatte 31 in axialer Richtung durchdringen.

Weiterhin ist in der Steuerplatte 31 vorzugsweise eine dritte Steuerniere 50 und eine vierte Steuerniere 51 ausgebildet. Während die erste und die dritte Steuerniere 48 bzw. 50 über die Anschlußplatte 5 mit Arbeitsleitungen 52 bzw. 53 des ersten hydraulischen Kreislaufs verbunden sind, sind in entsprechender Weise die zweite Steuerniere 49 und die vierte Steuerniere 51 mit den Arbeitsleitungen 54 bzw. 55 des zweiten hydraulischen Kreislauf verbunden.

Die erste und dritte Steuerniere 48 und 50 weisen einen identischen ersten Abstand R₁' von der Längsachse 52 der Zylindertrommel 23 auf, der kleiner ist als der wiederum für die zweite Steuerniere 49 und die vierte Steuerniere 51 identische zweite Abstand R_{2'} von der Längsachse 52. Während einer Umdrehung der gemeinsamen Antriebswelle 1 werden die ersten Verbindungskanäle 45.1 im Wechsel mit der ersten Steuerniere 48 und der dritten Steuerniere 50 verbunden, so daß aufgrund der Hubbewegung der in den Zylinderbohrungen 32.1 der ersten Gruppe angeordneten Kolben 33 das Druckmittel z. B. über die dritte Steuerniere 50 angesaugt und über die erste Steuerniere 48 in die druckseitige Arbeitsleitung 52 oder 53 des ersten hydraulischen Kreislaufs gepumpt wird. Die ersten Verbindungskanäle 45.1 münden hierzu an der Stirnseite 46 der Zylindertrommel 23 in einem ersten Abstand R₁ von der Längsachse 52 der Zylindertrommel 23 aus, der dem ersten Abstand R₁' der ersten bzw. dritten Steuerniere 48 bzw. 50 von der Längsachse 52 der Zylindertrommel 23 entspricht.

In dem dargestellten Ausführungsbeispiel sind die ersten Verbindungskanäle 45.1 so in der Zylindertrommel 23 angeordnet, daß sie eine radiale Richtungskomponente aufweisen, durch die der erste Abstand R₁ der Ausmündung an der Stirnseite 46 kleiner ist als der Abstand auf der entgegengesetzten Seite der ersten Verbindungskanäle 45.1. Die zweiten Verbindungskanäle 45.2 münden dementsprechend an der Stirnseite 46 der Zylindertrommel 23 mit einem zweiten Abstand R₂ aus, der mit einem zweiten Abstand R_{2'} der zweiten und vierten Steuerniere 49 und 51 von der Längsachse 52 korrespondiert. Während einer Umdrehung der gemeinsamen Antriebswelle 1 werden damit die Zylinderbohrungen der zweiten Gruppe 32.2 über die zweiten Verbindungskanäle 32.2 abwechselnd mit der zweiten und vierten Steuerniere 49 und 51 verbunden.

Um während eines Saughubs ein Abheben der Gleitschuhe 34 von der Lauffläche 35 der Schwenkscheibe 36 zu verhindern, ist eine Niederhalteplatte 53 vorgesehen, welche die Gleitschuhe 34 an einem hierfür vorgesehenen Absatz umgreift. Die Niederhalteplatte 53 weist eine kugelförmige, zentrale Ausnehmung 54 auf, mit der sie sich an einem Stützkopf 55 abstützt, der an dem von der Stirnseite 46 abgewandten Ende der Zylindertrommel 23 angeordnet ist.

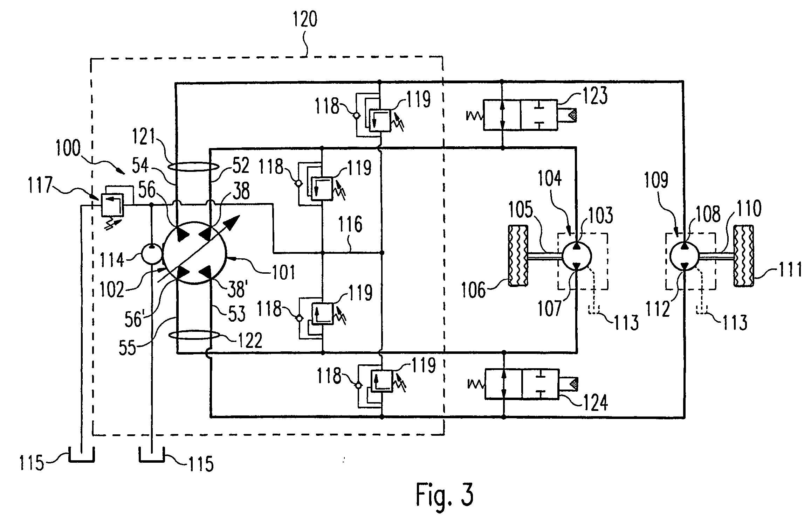

In Fig. 3 ist eine erste Ausführungsforrm eines erfindungsgemäßen hydraulischen Antriebssystems mit pumpenseitiger Hydraulikfluidmengenteilung unter Verwendung der obig beschriebenen erfindungsgemäßen Hydropumpe 100 mit zwei Teilfördersträngen 101 und 102 gezeigt.

Der Anschluß 38 des ersten Teilförderstrangs 101 der erfindungsgemäßen Hydropumpe 101 ist über die erste Arbeitsleitungen 52 mit dem ersten Anschluß 103 des ersten Hydromotors 104 verbunden. Der erste Hydromotor 104 treibt über einen ersten Antriebsstrang 105 ein erstes Rad 106 eines Fahrzeugs an. Der zweite Anschluß 107 des ersten Hydromotors 104 ist über die Arbeitsleitung 55 mit dem zweiten Anschluß 56' des zweiten Teilförderstrangs 102 der erfindungsgemäßen Hydropumpe 100 verbunden. Der erste Anschluß 56 des zweiten Teilförderstrangs 102 der erfindungsgemäßen Hydropumpe 100 ist über die Arbeitsleitung 54 mit dem ersten Anschluß 108 des zweiten Hydromotors 109 verbunden. Der zweite Hydromotor 109 treibt über einen zweiten Antriebsstrang 111 ein zweites Rad 111 eines Fahrzeugs an. Der zweite Anschluß 112 des zweiten Hydromotors ist über die Arbeitsleitung 53 mit dem zweiten Anschluss 38' des ersten Teilförderstrangs 101 der erfindungsgemäßen Hydropumpe 100 verbunden. Das Leckvolumen des ersten und zweiten Hydromotors 104 und 109 ist jeweils mit einem Hydrauliktank 113 zur Abfuhr von leckendem Hydraulikfluid verbunden.

Über eine in Fig. 3 nicht dargestellte Antriebswelle ist die in ihrer Hydraulikfluidmenge verstellbare Hydropumpe 100 mit ihren beiden Teilfördersträngen 101 und 102 mit einer Hilfspumpe 114 mechanisch gekoppelt. Die Hilfspumpe 114 fördert aus einem Tank 115 ein Hydraulikfluid in eine Speiseleitung 116. Der Druck des Hydraulikfluid in der Speiseleitung 116 wird über ein Druckbegrenzungsventil 117 auf ein bestimmtes Druckniveau eingestellt. Bei Druckabfall in den Arbeitsleitungen 52, 53, 54 und/oder 55 wird von der Speiseleitung 116 über jeweils einen Rückschlagventil 117 Hydraulikfluid in die Arbeitsleitung 52, 53, 54 und/oder 55 nachgeführt. Tritt ein Überdruck in den Arbeitsleitungen 52, 53, 54 und/oder 55 auf, so wird der Überdruck von der einen Überdruck führenden Arbeitsleitung 52, 53, 54 und/oder 55 auf bekannte Weise über jeweils ein Überdruckventil 118 in die Speiseleitung 116 abgebaut. Die Hydropumpe 100 mit ihren beiden Teilfördersträngen 101 und 102, die Hilfspumpe 114, das Druckbegrenzungsventil 117 sowie die vier Rückschlagventile 118 und die vier Überdruckventile 119 bilden zusammen ein Pumpenaggregat 120.

Die beiden Teilförderstränge 101 und 102 der erfindungsgemäßen Hydropumpe 100 und die beiden Hydromotoren 104 und 109 bilden zusammen mit den Arbeitsleitungen 52, 53, 54 und 55 einen einzigen hydraulischen ersten Kreislauf. Aufgrund dieser Serienschaltung des ersten Hydromotors 104 und des zweiten Hydromotors 109 sowie der beiden Teilförderstränge 101 und 102 der Hydropumpe 100 fließt in allen Arbeitsleitungen 52, 53, 54 und 55 ein gleich großer Hydraulikfluidstrom. Ein möglicher Schlupf oder ein mögliches Durchdrehen des Rades 106 oder 111 bei fehlender Haftung des Rades 106 oder 111 auf der Fahrbahnoberfläche und ein damit einhergehender Anstieg des Hydraulikfluidstromes im ersten Hydromotor 104 oder im zweiten Hydromotor 109 wird unterbunden, da das jeweils andere nicht schlüpfende oder nicht durchdrehende Rad 111 oder 106 die Höhe des Hydraulikfluidstromes im hydraulischen Kreislauf auf den zum normalen Betriebsfall korrespondierenden Wert begrenzt. Auf diese Weise wird der schlupfende oder durchdrehende erste bzw. zweite Hydromotor 104 bzw. 109 durch den nicht schlupfenden und nicht durchdrehenden zweiten oder ersten Hydromotor 109 bzw. 104 abgebremst. Ein hydraulisches "Überbrücken" des nicht schlupfenden und nicht durchdrehenden ersten oder zweiten Hydromotors 104 oder 109 durch den schlupfenden oder durchdrehenden zweiten oder ersten Hydromotor 109 oder 104 ist folglich bei dieser Konfiguration nicht möglich.

Kurvenfahrten führen aufgrund der unterschiedlichen Laufwege der Räder zu unsymmetrischen Druckverhältnissen am ersten oder zweiten Hydromotor 104 und 109. Derartige Druckunterschiede zwischen den Arbeitsleitungen 52 und 54 bzw. 53 und 55 bei Kurvenfahrt des Fahrzeugs können durch Zwischenschaltung jeweils eines 2/2-Wegeventils 123 und 124 überbrückt werden. Werden diese 2/2-von der Steuerelektronik des Fahrzeugs bei Kurvenfahrt und nicht auftretenden Schlupf eines Rades 106 oder 111 abgeschaltet, so wird das jeweilige 2/2-Wegeventil in den geöffneten Zustand geschaltet, bei dem die jeweiligen Arbeitsleitungen 52 und 54 bzw. 53 und 55 miteinander hydraulisch verbunden sind. Auf diese Weise finden zwischen den Arbeitsleitungen 52 und 54 bzw. 53 und 55 hydraulische Ausgleichsströme zum Abbau des Druckunterschiedes zwischen den Arbeitsleitungen 52 und 54 bzw. 53 und 55 statt.

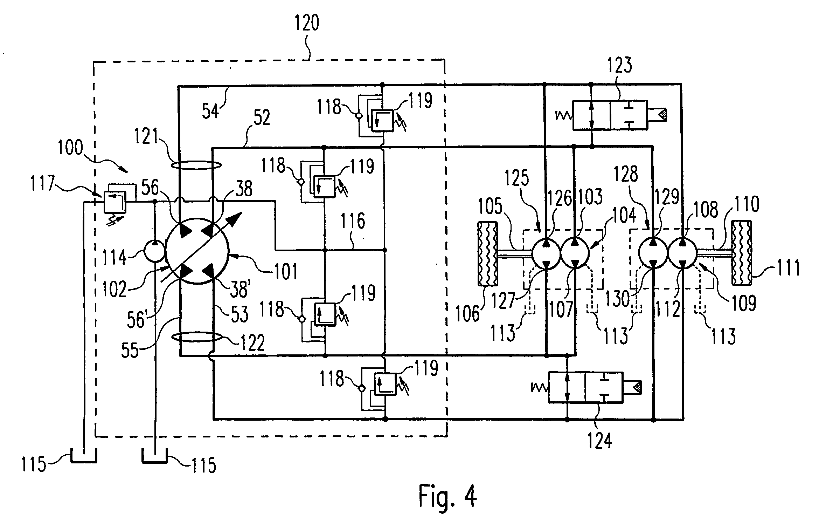

In Fig. 4 ist eine zweite Ausführungsform des erfindungsgemäßen hydraulischen Antriebssystems mit pumpenseitiger Hydraulikfluidmengenteilung unter Anwendung der Hydropumpe 100 mit den beiden Teilfördersträngen 101 und 102 dargestellt.

Die zweite Ausführungsform in Fig. 4 baut auf der ersten Ausführungsform in Fig. 3 auf, so daß bei der folgenden Beschreibung wie auch bei allen zu den nun folgenden Ausführungsformen gehörigen Beschreibungen für dieselben Merkmale dieselben Bezugszeichen verwendet werden und auf deren wiederholte Beschreibung verzichtet wird.

In der zweiten Ausführungsform des erfindungsgemäßen hydraulischen Antriebssystems wird der erste Antriebsstrang 105 zusätzlich zum ersten Hydromotor 104 durch einen dritten Hydromotor 125, der mit dem ersten Hydromotor 104 mechanisch gekoppelt ist, angetrieben. Der dritte Hydromotor 125 ist mit seinem ersten Anschluß 126 über die Arbeitsleitungen 54 mit dem ersten Anschluß 56 des zweiten Teilförderstranges 102 der Hydropumpe 100 und mit seinem zweiten Anschluß 125 über die Arbeitsleitung 55 mit dem zweiten Anschluß 56' des zweiten Teilförderstrangs 102 der Hydropumpe 100 verbunden. Einen vierten Hydromotor 128, der mit dem zweiten Hydromotor 109 mechanisch gekoppelt ist und mit diesem den zweiten Antriebsstrang 110 antreibt, ist an seinem ersten Anschluß 129 über die Arbeitsleitung 52 mit dem ersten Anschluß 38 des ersten Teilförderstrangs 101 der Hydropumpe 100 und mit seinem zweiten Anschluß 130 über die Arbeitsleitung 53 mit dem zweiten Anschluß 38' des ersten Teilförderstrangs 101 Hydropumpe 100 verbunden.

Ein Schlupf oder ein Durchdrehen des ersten Antriebstrangs 105 oder des zweiten Antriebsstrangs 110 wird in Analogie zur ersten Ausführungsform durch die bremsende Wirkung des geschlossenen hydraulischen Kreislaufes bestehend aus dem ersten Hydromotor 104, dem zweiten Hydromotor 109, den beiden Teilfördersträngen 101 und 102 der Hydropumpe 100 und den Arbeitsleitungen 53, 53, 54 und 55 realisiert. Ein möglicherweise schlupfendes oder durchdrehendes Hydromotorenpaar 104 und 126 bzw. 109 und 128 wird durch das jeweils andere nicht schlupfende und nicht durchdrehende Hydromotorenpaar 109 und 128 bzw. 104 und 126 abgebremst. Die nicht kreuzweise hydraulische Verschaltung des dritten Hydromotors 125 und des vierten Hydromotors 128 mit dem ersten und zweiten Teilförderstrang 101 und 102 der Hydropumpe 100 ist für die Verhinderung der Schlupfes oder Durchdrehens des ersten oder zweiten Antriebsstranges 105 oder 110 nicht relevant, da die Abbremsung über die hydraulische Serienschaltung des ersten bzw. zweiten Hydromotors 104 bzw. 109 erfolgt.

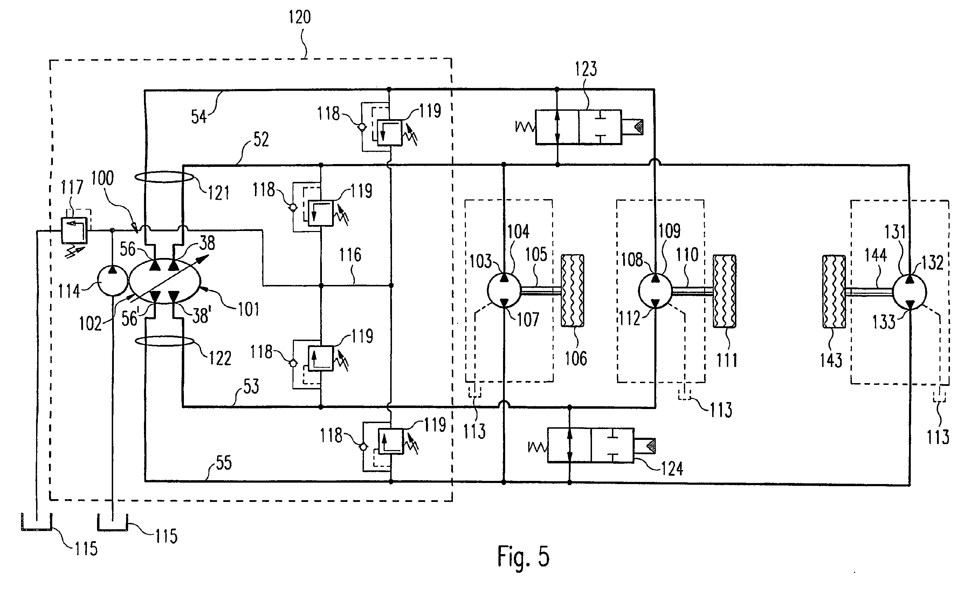

In Fig. 5 ist eine dritte Ausführungsform des hydraulischen Antriebssystems mit pumpenseitiger Hydraulikfluidmengenteilung unter Anwendung der erfindungsgemäßen Hydropumpe 100 mit den beiden Teilfördersträngen 101 und 102 dargestellt.

Die dritte Ausführungsform in Fig. 5, die auf der ersten Ausführungsform in Fig. 3 aufbaut, weist einen fünften Hydromotor 131 auf, der einen mit einem Rad 143 verbundenen dritten Antriebsstrang 144 antreibt. Der erste und dritte Antriebsstrang 105, 144 bilden jeweils den linken und rechten vorderen Antrieb des Fahrzeugs, während der zweite Antriebsstrang 110 den hinteren Antrieb des Fahrzeugs darstellt. Der fünfte Hydromotor 131 mit seinem ersten Anschluß 132 ist über die Arbeitsleitung 52 mit dem ersten Anschluß 38 des ersten Teilförderstrangs 101 der Hydropumpe 100 und mit seinem zweiten Anschluß 133 über die Arbeitsleitung 55 mit den zweiten Anschluß 56' des zweiten Teilförderstrangs 102 der Hydropumpe 100 verbunden. Der fünfte Hydromotor 131 ist folglich zum ersten Hydromotor 104 hydraulisch parallel geschaltet.

Ein möglicher Schlupf oder ein mögliches Durchdrehen des ersten Hydromotors 104 oder des fünften Hydromotors 131 wird durch den nicht schlupfenden und nicht durchdrehenden zweiten Hydromotor 109 abgebremst, während ein möglicher Schlupf oder ein mögliches Durchdrehen des zweiten Hydromotor 109 durch den nicht schlupfenden und nicht durchdrehenden ersten und fünften Hydromotor 104 und 131 in Analogie zur Funktionsweise der ersten und zweiten Ausführungsform abgebremst wird.

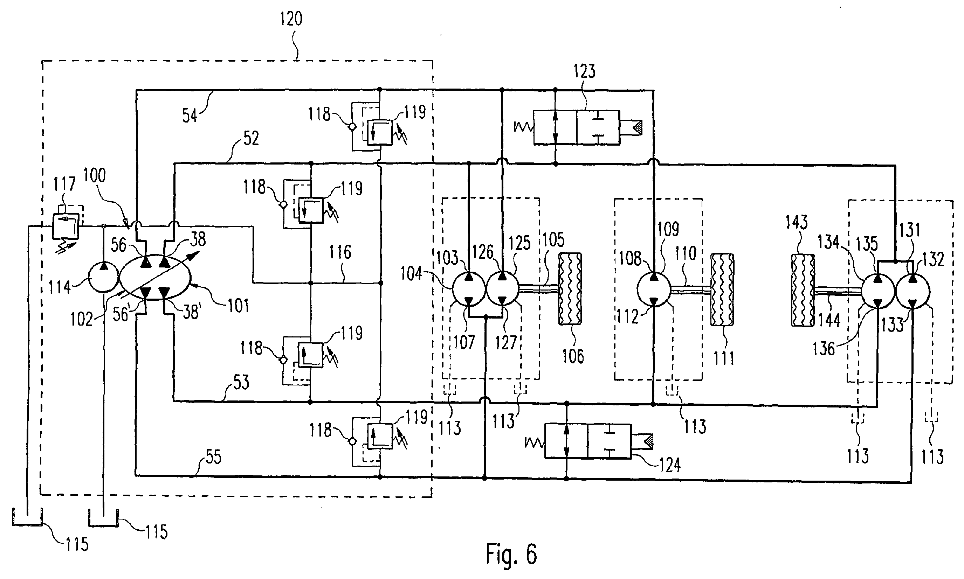

In Fig. 6 ist eine vierte Ausführungsform des erfindungsgemäßen hydraulischen Antriebssystems mit pumpenseitiger Hydraulikfluidmengenteilung unter Anwendung der Hydropumpe 100 mit dem beiden Teilfördersträngen 101 und 102 dargestellt.

Die vierte Ausführungsform in Fig. 6, die auf der dritten Ausführungsform in Fig. 5 aufbaut, weist einen dritten Hydromotor 125, der mit dem ersten Hydromotor 104 mechanisch gekoppelt ist und den ersten Antriebsstrang 105 mit diesem gemeinsam antreibt, und einen sechsten Hydromotor 134 auf, der mit dem fünften Hydromotor 131 mechanisch gekoppelt ist und mit diesem den dritten Antriebsstrang 144 gemeinsam antreibt.

Der dritte Hydromotor 125 ist mit seinem ersten Anschluß 126 und mit seinem zweiten Anschluß 127 ganz analog wie in der zweiten Ausführungsform der Hydropumpe 100 hydraulisch verschaltet. Der sechste Hydromotor 134 ist mit seinen ersten Anschluß 135 über die Arbeitsleitung 52 mit dem ersten Anschluß 38 des ersten Teilförderstrangs 101 der Hydropumpe 100 und mit seinem zweiten Anschluß 136 über die Arbeitsleitung 53 mit dem zweiten Anschluß 38' des ersten Teilförderstrangs 101 der Hydropumpe 100 verbunden.

Ein Schlupf oder ein Durchdrehen des zweiten Antriebsstrangs 110 und damit des zweiten Hydromotors 109 wird durch den nicht schlupfenden und nicht durchdrehenden ersten Antriebsstrang 105 und den daran gekoppelten ersten und dritten Hydromotor 104 und 125 und durch den nicht schlupfenden und nicht durchdrehenden dritten Antriebsstrang 144 und den daran gekoppelten fünften und sechsten Hydromotor 131 und 134 abgebremst. Dagegen wird ein Schlupf oder ein Durchdrehen des ersten Antriebsstrangs 105 und des daran gekoppelten ersten und dritten Hydromotors 104 und 105 oder ein Schlupf oder ein Durchdrehen des dritten Antriebsstrangs 144 und des daran gekoppelten fünften und sechsten Hydromotors 131 und 134 durch den nicht schlupfenden und nicht durchdrehenden zweiten Antriebsstrang 110 und den daran gekoppelten zweiten Hydromotor 109 abgebremst. Für die nicht kreuzweise Verschaltung des dritten und sechsten Hydromotors 125 und 134 mit dem beiden Teilfördersträngen 101 und 102 der Hydropumpe 100 gilt das bei der Beschreibung zur zweiten Ausführungsform Gesagte.

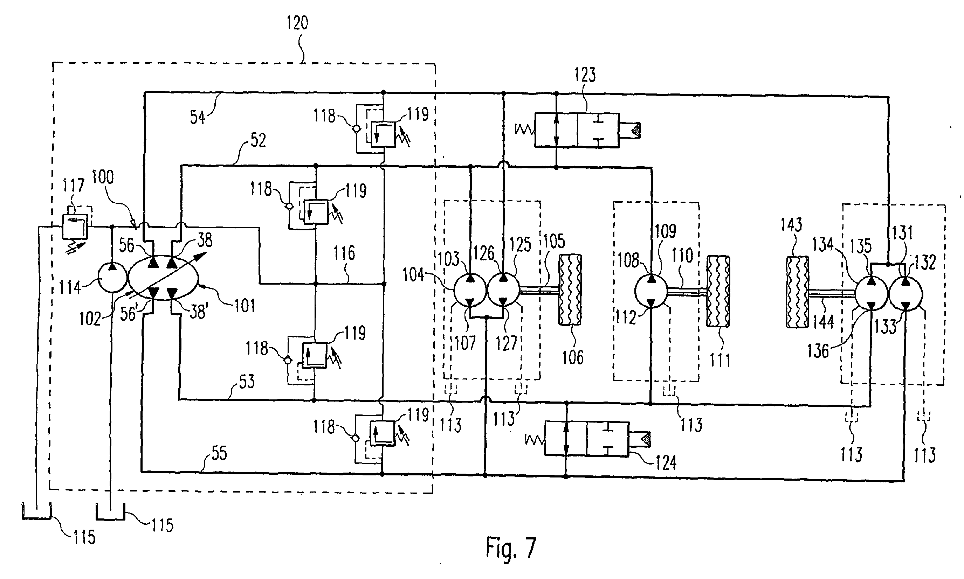

In Fig. 7 ist eine fünfte Ausführungsform des erfindungsgemäßen hydraulischen Antriebssystems mit pumpenseitiger Hydraulikfluidmengenteilung unter Anwendung der Hydropumpe 100 mit den beiden Teilfördersträngen 101 und 102 dargestellt.

Im Unterschied zur vierten Ausführungsform in Fig. 6 ist der zweite Hydromotor 109 in der fünfte Ausführungsform in Fig. 7 mit seinem ersten Anschluß 108 mit dem ersten Anschluß 38 des ersten Teilförderstrangs 101 der Hydropumpe 100 und mit seinen zweiten Anschluß 112 über die Arbeitsleitung 53 mit dem zweiten Anschluß 38' des ersten Teilförderstrangs 101 der Hydropumpe 100 verbunden. Der erste Anschluß 132 des fünften Hydromotors 131 und der erste Anschluß 135 des sechsten Hydromotors 134 ist nicht wie in der vierten Ausführungsform mit dem ersten Anschluß 38 des ersten Teilförderstrangs 101, sondern mit dem ersten Anschluß 56 des zweiten Teilförderstrangs 102 der Hydropumpe 1000 verbunden.

Ein Schlupf oder ein Durchdrehen des zweiten Hydromotors 109 wird trotz nicht kreuzweiser Verschaltung dieses zweiten Hydromotors 109 mit dem beiden Teilfördersträngen 101 und 102 der Hydropumpe 100 durch den nicht schlupfenden und nicht durchdrehenden ersten Hydromotor 104 bzw. den nicht schlupfenden und nicht durchdrehenden sechsten Hydromotor 134 abgebremst. Der erste Anschluß 108 des zweiten Hydromotors 109 erhält nämlich nach wie vor vom ersten Anschluß 38 des ersten Teilförderstrangs 101 der Hydropumpe 100 die gleiche Hydraulikfluidmenge, da der erste Anschluß 103 des ersten Hydromotors 104 nach wie vor vom ersten Anschluß 38 des ersten Teilförderstrangs 101 der Hydropumpe 100 die gleiche Hydraulikfluidmenge bezieht. Analog erhält der zweite Anschluß 112 des zweiten Hydromotors 109 nach wie vor vom zweiten Anschluß 38' des ersten Teilförderstrangs 101 der die gleiche Hydraulikfluidmenge, da der zweite Anschluß 136 des sechsten Hydromotors 134 nach wie vor vom zweiten Anschluß 38' des ersten Teilförderstrangs 101 der Hydropumpe 100 die gleiche Hydraulikfluidmenge bezieht.

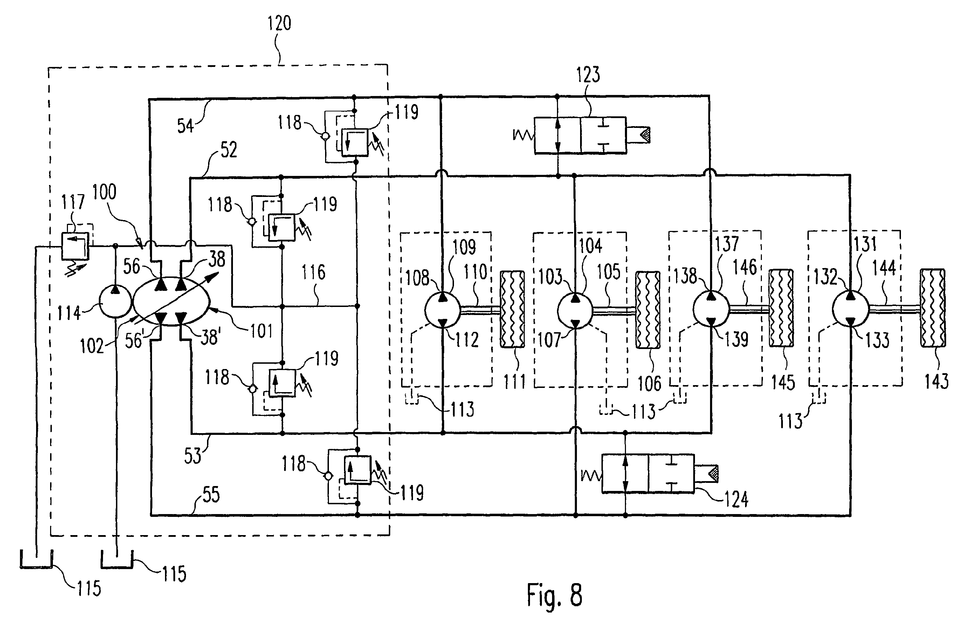

In Fig. 8 ist eine sechste Ausführungsform des erfindungsgemäßen hydraulischen Antriebssystems mit pumpenseitiger Hydraulikfluidmengenteilung unter Anwendung der Hydropumpe 100 mit den beiden Teilfördersträngen 101 und 102 dargestellt.

Aufbauend auf der dritten Ausführungsform in Fig. 5, in der der erste und fünfte Hydromotor 104 und 131 parallel geschaltet sind, ist in der sechsten Ausführungsform in Fig. 8 zum zweiten Hydromotor 109 ein siebenter Hydromotor 137 parallel geschaltet. Der erste Anschluß 138 des siebenten Hydromotors 137 ist über die Arbeitsleitung 54 mit dem ersten Anschluß 56 des zweiten Teilförderstrangs 102 der Hydropumpe 100 und mit seinem zweiten Anschluß 139 über die Arbeitsleitung 53 mit dem zweiten Anschluß 38' des ersten Teilförderstrangs 101 der Hydropumpe 100 verbunden. Dieser siebenter Hydromotor 137 treibt einen mit einem Rad 145 verbundenen vierten Antriebsstrang 146 an.

Ein Schlupf oder ein Durchdrehen des ersten Antriebsstrangs 105 und damit des ersten Hydromotors 104 oder ein Schlupf oder ein Durchdrehen des parallel geschalteten fünften Hydromotors 131 und damit des dritten Antriebsstrangs 144 wird durch den nicht schlupfenden und nicht durchdrehenden zweiten Antriebsstrang 110 und den daran gekoppelten zweiten Hydromotors 109 und durch den nicht schlupfenden und nicht durchdrehenden vierten Antriebsstrang 146 und den daran gekoppelten siebenten Hydromotor 137 verhindert, da der erste Hydromotor 104 und der dazu parallel geschaltete fünfte Hydromotor 131 über den geschlossenen hydraulischen Kreislauf mit dem zweiten Hydromotor 109 und dem dazu parallel geschalteten siebenten Hydromotor 137 in Serie geschaltet ist.

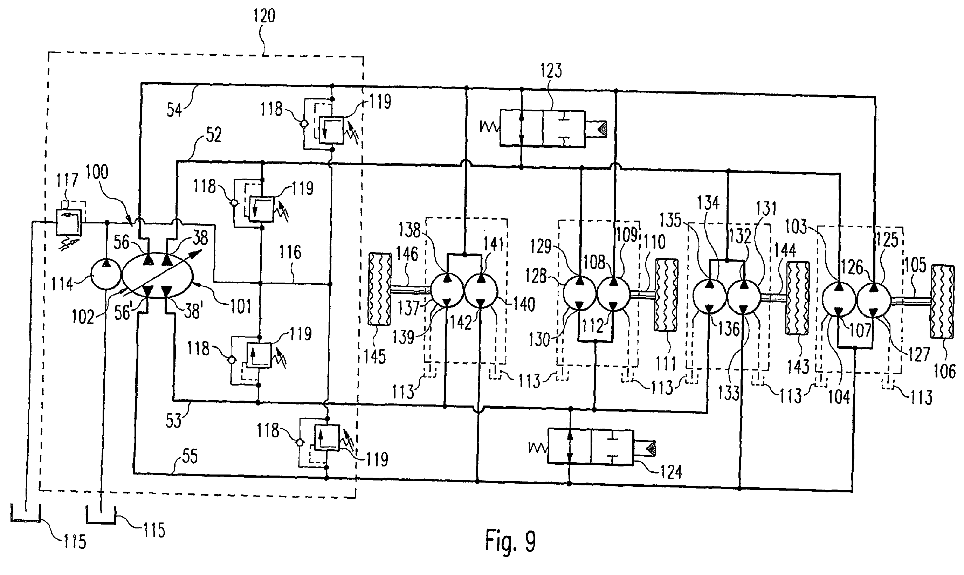

In Fig. 9 ist eine siebente Ausführungsform des erfindungsgemäßen hydraulischen Antriebssystems mit pumpenseitiger Hydraulikfluidmengenteilung unter Anwendung der Hydropumpe 100 mit dem beiden Teilfördersträngen 101 und 102 dargestellt.

Aufbauend auf der sechsten Ausführungsform in Fig. 8 wird der erste Hydromotor 104 in Analogie zur zweiten Ausführungsform in Fig. 4 mit dem dritten Hydromotor 125 zum Antrieb des ersten Antriebsstrangs 110, der zweite Hydromotor 109 in Analogie zur zweiten Ausführungsform in Fig. 4 mit dem vierten Hydromotor 128 zum Antrieb des zweiten Antriebsstrangs 105, der fünfte Hydromotor 131 in Analogie zur vierten Ausführungsform in Fig. 6 mit dem sechsten Hydromotor 134 zum Antrieb des dritten Antriebsstrangs 144 und der siebente Hydromotor 137 mit dem achten Hydromotor zum Antrieb des vierten Antriebsstrangs 146 mechanisch gekoppelt. Der achte Hydromotor 140 ist mit seinem ersten Anschluß 141 über die Arbeitsleitung 54 mit dem ersten Anschluß 56 des zweiten Teilförderstrangs 102 der Hydropumpe 100 und mit seinen zweiten Anschluß 142 über die Arbeitsleitung 55 mit dem zweiten Anschluß 56' des zweiten Teilförderstrangs 102 der Hydropumpe 100 verbunden.

Bei einem Schlupf oder einem Durchdrehen des ersten, zweiten, fünften oder siebenten Hydromotors 104, 109, 131 und 137 gilt das bei der Beschreibung des sechsten Ausführungsform Gesagte analog. Eine nicht kreuzweise hydraulische Verschaltung des dritten, vierten, sechsten und achten Hydromotors 125, 128, 134 und 140 mit den beiden Teilfördersträngen 101 und 102 der Hydropumpe 100 hat bei auftretendem Schlupf oder Durchdrehen des dritten, vierten, sechsten und/oder achten Hydromotors 125, 128, 134 und/oder 140 kein Ausbleiben der Bremsung des jeweiligen Hydromotors zur Folge, da der dritte, vierte, sechste und achte Hydromotor 125, 128, 134 und 140 jeweils mit dem ersten, zweiten, fünften und siebenten Hydromotor 104, 109, 131 und 137 mechanisch gekoppelt ist, für deren Abbremsung im Falle eines Schlupfes oder Durchdrehens aufgrund der kreuzweisen hydraulischen Verschaltung mit den beiden Teilförderstränge 101 und 102 der Hydropumpe 100 gesorgt ist.

Die Erfindung ist nicht auf die dargestellten Ausführungsformen beschränkt. Die beschriebenen Elemente sind im Rahmen der Erfindung beliebig miteinander kombinierbar. Insbesondere sei in diesem Zusammenhang auf die zur hydraulischen Verschaltung der Hydromotoren 104, 109, 125, 128, 131, 134, 137 und 140 in der zweiten Ausführungsform in Fig. 4, der vierten Ausführungsform in Fig. 6, der fünften Ausführungsform in Fig. 7 und der achten Ausführungsform in Fig. 9 komplementäre hydraulische Verschaltung hingewiesen, bei der anstelle der ersten Anschlüsse 103, 108, 126, 129, 132, 138 und 141 die zweiten Anschlüsse 107, 112, 127, 130, 133, 136, 139 und 140 jeweils miteinander hydraulisch verbunden sind.

## Patentansprüche

1. Hydrostatisches Antriebssystem mit mindestens einer Hydropumpe (100) und mindestens zwei Hydromotoren (104, 109, 125, 128, 131, 134, 137, 140), wobei die Hydropumpe (100) ihren Gesamthydraulikfluidstrom auf mindestens zwei Teilhydraulikfluidströme aufteilt, die jeweils in einem Teilförderstrang (101, 102) in einer gemeinsamen Zylindertrommel (23) der Hydropumpe (100) gefördert werden, und wobei mindestens ein erster einen ersten Antriebsstrang (105) antreibender Hydromotor (104) mit seinem ersten Anschluß (103) am ersten Anschluß (38) des ersten Teilförderstrangs (101) der Hydropumpe (100) und mit seinem zweiten Anschluß (107) am zweiten Anschluß (56') des zweiten Teilförderstrangs (102) der Hydropumpe (100) und mindestens ein zweiter einen zweiten Antriebsstrang (110) antreibender Hydromotor (109) mit seinem ersten Anschluß (108) am ersten Anschluß (56) des zweiten Teilförderstrangs (102) der Hydropumpe (100) und mit seinem zweiten Anschluß (112) am zweiten Anschluß (38') des ersten Teilförderstrangs (101) der Hydropumpe (100) verbunden ist.

2. Hydostatisches Antriebssystem nach Anspruch 1,
**dadurch gekennzeichnet,**
**daß** jeder Anschluß (38, 38', 56, 56') der Hydropumpe (100) mit dem Anschluß (103, 107, 108, 112, 126, 127, 129, 130, 132, 133, 135, 136, 138, 139, 141, 142) mindestens eines Hydromotors (104, 109, 125, 128, 131, 134, 137, 140) verbunden ist.

3. Hydrostatisches Antriebssystem nach Anspruch 1 oder 2,
**dadurch gekennzeichnet,**
**daß** entweder ein Hydromotor (104, 109, 131, 137) oder mehrere an einer gemeinsamen Antriebsachse (105, 110, 144, 146) miteinander mechanisch gekoppelte Hydromotoren (104, 109, 125, 128, 131, 134, 137, 140) einen Antriebsstrang (105, 110, 144, 146) antreiben.

4. Hydrostatisches Antriebssystem nach Anspruch 3,
**dadurch gekennzeichnet,**
**daß** ein dritter Hydromotor (125), der mit dem ersten Hydromotor (104) mechanisch gekoppelt den ersten Antriebsstrang (105) antreibt, mit seinem ersten Anschluß (126) am ersten Anschluß (56) des zweiten Teilförderstrangs (102) der Hydropumpe (100) und mit seinem zweiten Anschluß (127) am zweiten Anschluß (56') des zweiten Teilförderstrangs (102) der Hydropumpe (100) und ein vierter Hydromotor (128), der mit dem zweiten Hydromotor (109) mechanisch gekoppelt den zweiten Antriebsstrang (110) antreibt, mit seinem ersten Anschluß (129) am ersten Anschluß (38) des ersten Teilförderstrangs (101) der Hydropumpe (100) und mit seinem zweiten Anschluß (130) am zweiten Anschluß (38') des ersten Teilförderstrangs (101) der Hydropumpe (100) verbunden ist.

5. Hydrostatisches Antriebssystem nach Anspruch 3,
**dadurch gekennzeichnet,**
**daß** ein fünfter einen dritten Antriebsstrang (144) antreibender Hydromotor (131) mit seinem ersten Anschluß (132) am ersten Anschluß (38) des ersten Teilförderstranges (101) der Hydropumpe (100) und mit seinem zweiten Anschluß (133) am zweiten Anschluß (56') des zweiten Teilförderstrangs (102) der Hydropumpe (100) verbunden ist.

6. Hydrostatisches Antriebssystem nach Anspruch 5,
**dadurch gekennzeichnet,**
**daß** ein sechster Hydromotor (134), der mit dem fünften Hydromotor (131) mechanisch gekoppelt den dritten Antriebsstrang (144) antreibt, mit seinem ersten Anschluß (135) am ersten Anschluß (38) des ersten Teilförderstrangs (101) der Hydropumpe (100) und mit seinem zweiten Anschluß (136) am zweiten Anschluß (38') des ersten Teilförderstrangs (101) der Hydropumpe (100) verbunden ist.

7. Hydrostatisches Antriebssystem nach Anspruch 6,
**dadurch gekennzeichnet,**
**daß** der zweite Hydromotor (109) mit seinem ersten Anschluß (108) am ersten Anschluß (56) des zweiten Teilförderstrangs (102) der Hydropumpe (100), der fünfte Hydromotor (131) mit seinem ersten Anschluß (132) am ersten Anschluß (38) des ersten Teilförderstrangs (101) der Hydropumpe (100) und der sechste Hydromotor (134) mit seinem ersten Anschluß (135) am ersten Anschluß (38) des ersten Teilförderstrangs (101) der Hydropumpe (100) angeschlossen ist.

8. Hydrostatisches Antriebssystem nach Anspruch 5 oder 7,
**dadurch gekennzeichnet,**
**daß** ein siebenter einen vierten Antriebsstrang (146) antreibender Hydromotor (137) mit seinem ersten Anschluß (138) mit dem ersten Anschluß (56) des zweiten Teilförderstranges (102) der Hydropumpe (100) und mit seinem zweiten Anschluß (139) am zweiten Anschluß (38') des ersten Teilförderstranges (101) der Hydropumpe (100) verbunden ist.

9. Hydostatisches Antriebssystem nach Anspruch 8,
**dadurch gekennzeichnet,**
**daß** ein achter Hydromotor (140), der mit dem siebenten Hydromotor (137) mechanisch gekoppelt den vierten Antriebsstrang (146) antreibt, mit seinem ersten Anschluß (141) am ersten Anschluß (56) des zweiten Teilförderstranges (102) der Hydropumpe (100) und mit seinem zweiten Anschluß (142) am zweiten Anschluß (56') des zweiten Teilförderstranges (102) der Hydropumpe (100) verbunden ist.

10. Hydostatisches Antriebssystem nach einem der Ansprüche 1 bis 9,
**dadurch gekennzeichnet,**
**daß** jeweils zwischen den beiden Teilhydraulikfluidströmen in den beiden jeweiligen Arbeitsleitungen (52 und 54, 53 und 55), die jeweils mit den beiden ersten oder zweiten Anschlüssen (38 und 56, 38' und 56') der Hydropumpe (100) verbunden sind, im Bedarfsfall ein Ausgleichsstrom zum Differentialausgleich stattfindet.

11. Hydrostatisches Antriebssystem nach Anspruch 10,
**dadurch gekennzeichnet,**
**daß** der Ausgleichsstrom zwischen den beiden Teilhydraulikfluidströmen jeweils über ein zwischen den beiden Arbeitsleitungen (52 und 54, 53 und 55) geschaltetes 2/2-Wegeventil (123, 124) realisiert ist, das im Bedarfsfall gesperrt ist.

12. Hydostatisches Antriebssystem nach Anspruch 11,
**dadurch gekennzeichnet,**
**daß** jeweils eines der beiden 2/2-Wegeventile (123, 124) ein- und ausspeiseseitig in die Hydropumpe (100) integriert ist.

13. Hydostatisches Antriebssystem nach einem der Ansprüche 1 bis 12,
**dadurch gekennzeichnet,**
**daß** die Hydropumpe (100) als Verstellpumpe ausgeführt ist.

14. Hydostatisches Antriebssystem nach einem der Ansprüche 1 bis 13,
**dadurch gekennzeichnet,**
**daß** jeder Hydromotor (104, 109, 125, 128, 131, 134, 137, 140) als Konstantmotor, Schaltmotor und/oder Verstellmotor ausgeführt ist.

## Claims

1. Hydrostatic drive system having at least one hydraulic pump (100) and at least two hydraulic motors (104, 109, 125, 128, 131, 134, 137, 140), wherein said hydraulic pump (100) divides up its overall flow of hydraulic fluid over at least two partial flows of hydraulic fluid which are each delivered in a partial delivery line (101, 102) in a common cylinder drum (23) belonging to the hydraulic pump (100), and wherein at least one first hydraulic motor (104) driving a first drive line (105) is connected by its first connection (103) to the first connection (38) of the first partial delivery line (101) of the hydraulic pump (100), and by its second connection (107) to the second connection (56') of the second partial delivery line (102) of said hydraulic pump (100), and at least one second hydraulic motor (109) driving a second drive line (110) is connected by its first connection (108) to the first connection (56) of the second partial delivery line (102) of the hydraulic pump (100), and by its second connection (112) to the second connection (38') of the first partial delivery line (101) of said hydraulic pump (100).

2. Hydrostatic drive system according to claim 1,
**characterised in that**
each connection (38, 38', 56, 56') of the hydraulic pump (100) is connected to the connection (103, 107, 108, 112, 126, 127, 129, 130, 132, 133, 135, 136, 138, 139, 141, 142) of at least one hydraulic motor (104, 109, 125, 128, 131, 134, 137, 140).

3. Hydrostatic drive system according to claim 1 or 2,
**characterised in that**
either one hydraulic motor (104, 109, 131, 137) or a number of hydraulic motors (104, 109, 125, 128, 131, 134, 137, 140) which are mechanically coupled to one another with the aid of a common driving axle (105, 110, 144, 146) drive a drive line (105, 110, 144, 146).

4. Hydrostatic drive system according to claim 3,
**characterised in that**
a third hydraulic motor (125), which drives the first drive line (105) in a manner mechanically coupled to the first hydraulic motor (104), is connected by its first connection (126) to the first connection (56) of the second partial delivery line (102) of the hydraulic pump (100), and by its second connection (127) to the second connection (56') of the second partial delivery line (102) of said hydraulic pump (100), and a fourth hydraulic motor (128), which drives the second drive line (110) in a manner mechanically coupled to the second hydraulic motor (109), is connected by its first connection (129) to the first connection (38) of the first partial delivery line (101) of the hydraulic pump (100), and by its second connection (130) to the second connection (38') of the first partial delivery line (101) of said hydraulic pump (100).

5. Hydrostatic drive system according to claim 3,
**characterised in that** a fifth hydraulic motor (131) which drives a third drive line (144) is connected by its first connection (132) to the first connection (38) of the first partial delivery line (101) of the hydraulic pump (100), and by its second connection (133) to the second connection (56') of the second partial delivery line (102) of said hydraulic pump (100).

6. Hydrostatic drive system according to claim 5,
**characterised in that** a sixth hydraulic motor (134), which drives the third drive line (144) in a manner mechanically coupled to the fifth hydraulic motor (131), is connected by its first connection (135) to the first connection (38) of the first partial delivery line (101) of the hydraulic pump (100), and by its second connection (136) to the second connection (38') of the first partial delivery line (101) of said hydraulic pump (100).

7. Hydrostatic drive system according to claim 6,
**characterised in that** the second hydraulic motor (109) is connected by its first connection (108) to the first connection (56) of the second partial delivery line (102) of the hydraulic pump (100), the fifth hydraulic motor (131) is connected by its first connection (132) to the first connection (38) of the first partial delivery line (101) of said hydraulic pump (100), and the sixth hydraulic motor (134) is connected by its first connection (135) to the first connection (38) of the first partial delivery line (101) of said hydraulic pump (100).

8. Hydrostatic drive system according to claim 5 or 7,
**characterised in that** a seventh hydraulic motor (137), which drives a fourth drive line (146), is connected by its first connection (138) to the first connection (56) of the second partial delivery line (102) of the hydraulic pump (100), and by its second connection (139) to the second connection (38') of the first partial delivery line (101) of said hydraulic pump (100).

9. Hydrostatic drive system according to claim 8,
**characterised in that** an eighth hydraulic motor (140), which drives the fourth drive line (146) in a manner mechanically coupled to the seventh hydraulic motor (137), is connected by its first connection (141) to the first connection (56) of the second partial delivery line (102) of the hydraulic pump (100), and by its second connection (142) to the second connection (56') of the second partial delivery line (102) of said hydraulic pump (100).

10. Hydrostatic drive system according to one of claims 1 to 9,
**characterised in that**,
if necessary, an equalising flow for equalising a differential takes place, in each case, between the two partial flows of hydraulic fluid in the two particular working conduits (52 and 54, 53 and 55) which are connected, in each case, to the two first or second connections (38 and 56, 38' and 56') of the hydraulic pump (100).

11. Hydrostatic drive system according to claim 10,
**characterised in that**
the equalising flow between the two partial flows of hydraulic fluid is realised, in each case, via a 2/2-way valve (123, 124) which is connected between the two working conduits (52 and 54, 53 and 55) and which is closed if necessary.

12. Hydrostatic drive system according to claim 11,
**characterised in that**
one of the two 2/2-way valves (123, 124) is integrated into the hydraulic pump (100) on the feeding-in and feeding-out sides in each case.

13. Hydrostatic drive system according to one of claims 1 to 12,
**characterised in that** the hydraulic pump (100) is designed as an adjusting pump.

14. Hydrostatic drive system according to one of claims 1 to 13,
**characterised in that**
each hydraulic motor (104, 109, 125, 128, 131, 134, 137, 140) is designed as a fixed-displacement motor, a torque motor and/or an adjusting motor.

## Revendications

1. Système d'entraînement hydrostatique avec au moins une pompe hydraulique (100) et au moins deux moteurs hydrauliques (104, 109, 125, 128, 131, 134, 137, 140), la pompe hydraulique (100) répartissant le total du débit du fluide hydraulique sur au moins deux débits partiels de fluide hydraulique qui sont transportés chacun dans une ligne de transport partiel (101, 102) dans un tambour commun des cylindres (23) de la pompe hydraulique (100), et au moins un premier moteur hydraulique (104) entraînant une première chaîne cinématique (105) étant relié avec son premier raccordement (103) sur le premier raccordement (38) de la première ligne de transport partiel (101) de la pompe hydraulique (100) et avec son deuxième raccordement (107) sur le deuxième raccordement (56') de la deuxième ligne de transport partiel (102) de la pompe hydraulique (100), et au moins un deuxième moteur hydraulique entraînant (109) une deuxième chaîne cinématique (110) étant relié avec son premier raccordement (108) sur le premier raccordement (56) de la deuxième ligne de transport partiel (102) de la pompe hydraulique (100) et avec son deuxième raccordement (112) sur le deuxième raccordement (38') de la première ligne de transport partiel (101) de la pompe hydraulique (100).

2. Système d'entraînement hydrostatique selon la revendication 1,
**caractérisé en ce que**
chaque raccordement (38, 38', 56, 56') de la pompe hydraulique (100) est relié au raccordement (103, 107, 108, 112, 126, 127, 129, 130, 132, 133, 135, 136, 138, 139, 141, 142) d'au moins un moteur hydraulique (104, 109, 125, 128, 131, 134, 137, 140).

3. Système d'entraînement hydrostatique selon la revendication 1 ou 2,
**caractérisé en ce que**
soit un moteur hydraulique (104, 109, 131, 137) soit plusieurs moteurs hydrauliques (104, 109, 125, 128, 131, 134, 137, 140) couplés ensemble mécaniquement sur un arbre d'entraînement commun (105, 110, 144, 146) entraînent une chaîne cinématique (105, 110, 144, 146).

4. Système d'entraînement hydrostatique selon la revendication 3,
**caractérisé en ce que**
un troisième moteur hydraulique (125) qui, couplé mécaniquement au premier moteur hydraulique (104), entraîne la première chaîne cinématique (105), est relié avec son premier raccordement (126) sur le premier raccordement (56) de la deuxième ligne de transport partiel (102) de la pompe hydraulique (100) et avec son deuxième raccordement (127) sur le deuxième raccordement (56') de la deuxième ligne de transport partiel (102) de la pompe hydraulique (100) et **en ce qu'**un quatrième moteur hydraulique (128) qui, couplé mécaniquement au deuxième moteur hydraulique (109), entraîne la deuxième chaîne cinématique (110), est relié avec son premier raccordement (129) sur le premier raccordement (38) de la première ligne de transport partiel (101) de la pompe hydraulique (100) et avec son deuxième raccordement (130) sur le deuxième raccordement (38') de la première ligne de transport partiel (101) de la pompe hydraulique (100).

5. Système d'entraînement hydrostatique selon la revendication 3,
**caractérisé en ce que**
un cinquième moteur hydraulique (131) entraînant une troisième chaîne cinématique (144) est relié avec son premier raccordement (132) sur le premier raccordement (38) de la première ligne de transport partiel (101) de la pompe hydraulique (100) et avec son deuxième raccordement (133) sur le deuxième raccordement (56') de la deuxième ligne de transport partiel (102) de la pompe hydraulique (100).

6. Système d'entraînement hydrostatique selon la revendication 5,
**caractérisé en ce que**
un sixième moteur hydraulique (134) qui, couplé mécaniquement avec le cinquième moteur hydraulique (131), entraîne la troisième chaîne cinématique (144), est relié avec son premier raccordement (135) sur le premier raccordement (38) de la première ligne de transport partiel (101) de la pompe hydraulique (100) et avec son deuxième raccordement (136) sur le deuxième raccordement (38') de la première ligne de transport partiel (101) de la pompe hydraulique (100).

7. Système d'entraînement hydrostatique selon la revendication 6,
**caractérisé en ce que**
le deuxième moteur hydraulique (109) est raccordé avec son premier raccordement (108) sur le premier raccordement (56) de la deuxième ligne de transport partiel (102) de la pompe hydraulique (100), **en ce que** le cinquième moteur hydraulique (131) est raccordé avec son premier raccordement (132) sur le premier raccordement (38) de la première ligne de transport partiel (101) de la pompe hydraulique (100), et **en ce que** le sixième moteur hydraulique (134) est raccordé avec son premier raccordement (135) sur le premier raccordement (38) de la première ligne de transport partiel (101) de la pompe hydraulique (100).

8. Système d'entraînement hydrostatique selon la revendication 5 ou 7,
**caractérisé en ce que**
un septième moteur hydraulique (137) entraînant une quatrième chaîne cinématique (146) est relié avec son premier raccordement (138) avec le premier raccordement (56) de la deuxième ligne de transport partiel (102) de la pompe hydraulique (100) et avec son deuxième raccordement (139) sur le deuxième raccordement (38') de la première ligne de transport partiel (101) de la pompe hydraulique (100).

9. Système d'entraînement hydrostatique selon la revendication 8,
**caractérisé en ce que**
un huitième moteur hydraulique (140) qui, mécaniquement couplé avec le septième moteur hydraulique (137), entraîne la quatrième chaîne cinématique (146), est relié avec son premier raccordement (141) sur le premier raccordement (56) de la deuxième ligne de transport partiel (102) de la pompe hydraulique (100) et avec son deuxième raccordement (142) sur le deuxième raccordement (56') de la deuxième ligne de transport partiel (102) de la pompe hydraulique (100).

10. Système d'entraînement hydrostatique selon l'une quelconque des revendications 1 à 9,
**caractérisé en ce que**
respectivement entre les deux débits partiels de fluide hydraulique dans les deux conduites de travail (52 et 54, 53 et 55) respectives, qui sont reliées respectivement aux deux premiers ou deuxièmes raccordements (38 et 56, 38' et 56') de la pompe hydraulique (100), il se produit en cas de besoin un courant de compensation pour la compensation de différentiel.

11. Système d'entraînement hydrostatique selon la revendication 10,
**caractérisé en ce que**
le courant de compensation entre les deux débits partiels de fluide hydraulique est réalisé respectivement par un distributeur 2/2 (123, 124) monté entre les deux conduites de travail (52 et 54, 53 et 55), qui est fermé en cas de besoin.

12. Système d'entraînement hydrostatique selon la revendication 11,
**caractérisé en ce que**
un respectivement des deux distributeurs 2/2 (123, 124) est intégré côté entrée et sortie dans la pompe hydraulique (100).

13. Système d'entraînement hydrostatique selon l'une quelconque des revendications 1 à 12,
**caractérisé en ce que**
la pompe hydraulique (100) est réalisée comme pompe à cylindrée variable.

14. Système d'entraînement hydrostatique selon l'une quelconque des revendications 1 bis 13,
**caractérisé en ce que**
chaque moteur hydraulique (104, 109, 125, 128, 131, 134, 137, 140) est réalisé comme moteur à cylindrée constante, comme moteur commutable et/ou comme moteur à cylindrée variable.
